(19) Europäisches Patentamt
European Patent Office
Office européen des brevets

(11) EP 3 230 416 B1

(12) # FASCICULE DE BREVET EUROPEEN

(45) Date de publication et mention de la délivrance du brevet:
**20.02.2019 Bulletin 2019/08**

(21) Numéro de dépôt: **15805426.2**

(22) Date de dépôt: **01.12.2015**

(51) Int Cl.:
***C10J 3/72*** *(2006.01)*

(86) Numéro de dépôt international:
**PCT/EP2015/078243**

(87) Numéro de publication internationale:
**WO 2016/091665 (16.06.2016 Gazette 2016/24)**

(54) **INSTALLATION ET PROCEDE DE COMBUSTION PAR OXYDO-REDUCTION EN BOUCLE CHIMIQUE D'UNE CHARGE HYDROCARBONEE GAZEUSE AVEC PRE- REFORMAGE CATALYTIQUE DE LA CHARGE**

ANLAGE UND VERFAHREN ZUR CHEMICAL-LOOPING-OXIDATION-COMBUSTION MIT OXIDATIONSREDUKTION EINES GASFÖRMIGEN KOHLENWASSERSTOFFEINSATZSTOFFES MIT KATALYTISCHER VORREFORMIERUNG DES EINSATZSTOFFES

PLANT AND PROCESS FOR CHEMICAL LOOPING OXIDATION-REDUCTION COMBUSTION OF A GASEOUS HYDROCARBON FEEDSTOCK WITH CATALYTIC PRE-REFORMING OF THE FEEDSTOCK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2014 FR 1462319**

(43) Date de publication de la demande:
**18.10.2017 Bulletin 2017/42**

(73) Titulaires:
- **IFP Energies nouvelles**
  **92500 Rueil-Malmaison (FR)**
- **Total Raffinage Chimie**
  **92400 Courbevoie (FR)**

(72) Inventeurs:
- **GUILLOU, Florent**
  **69360 Ternay (FR)**
- **FISCHER, Beatrice**
  **69005 Lyon (FR)**
- **SOZINHO, Tiago**
  **69007 Lyon (FR)**
- **CLOUPET, Ann**
  **69420 Longes (FR)**
- **BERTHOLIN, Stéphane**
  **69630 Chaponost (FR)**
- **YAZDANPANAH, Mahdi**
  **76600 Le Havre (FR)**
- **STAINTON, Hélène**
  **77713 Beaumont, Texas (US)**

(74) Mandataire: **IFP Energies nouvelles**
**Rond-point de l'échangeur de Solaize**
**BP3**
**69230 Solaize (FR)**

(56) Documents cités:
**CN-A- 101 576 253**
**FR-A1- 2 941 689**
**US-A- 4 372 755**
**US-A- 5 447 024**
**US-A1- 2014 219 895**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 230 416 B1

## Description

### Domaine de l'invention

La présente invention concerne le domaine de la combustion d'hydrocarbures par oxydo-réduction en boucle chimique (CLC), et en particulier la combustion d'hydrocarbures gazeux tels que le méthane.

### Contexte général

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite.

Dans un contexte de demande énergétique mondiale croissante, la capture du dioxyde de carbone ($CO_2$) en vue de sa séquestration constitue une voie incontournable pour limiter l'émission de gaz à effet de serre préjudiciable à l'environnement. Le procédé d'oxydo-réduction en boucle sur masse active, ou Chemical Looping Combustion (CLC) dans la terminologie anglo-saxonne, permet de produire de l'énergie à partir de combustibles hydrocarbonés tout en facilitant la capture du $CO_2$ émis lors de la combustion.

Le procédé CLC consiste à mettre en oeuvre des réactions d'oxydo-réduction d'une masse active, typiquement un oxyde métallique, pour décomposer la réaction de combustion en deux réactions successives. Une première réaction d'oxydation de la masse active, avec de l'air ou un gaz jouant le rôle d'oxydant, permet d'oxyder la masse active. Cette réaction est fortement exothermique et développe généralement plus d'énergie que la combustion de la charge. Une seconde réaction de réduction de la masse active ainsi oxydée à l'aide d'un gaz réducteur permet ensuite d'obtenir une masse active réutilisable ainsi qu'un mélange gazeux comprenant essentiellement du $CO_2$ et de l'eau, voire du gaz de synthèse contenant de l'hydrogène ($H_2$) et du monoxyde d'azote (CO). Cette réaction est généralement endothermique. Cette technique permet donc d'isoler le $CO_2$ ou le gaz de synthèse dans un mélange gazeux pratiquement dépourvu d'oxygène et d'azote.

Le bilan de la combustion en boucle chimique, i.e. des deux réactions précédentes, est globalement exothermique et correspond au pouvoir calorifique de la charge traitée. Il est possible de produire de l'énergie à partir de ce procédé, sous la forme de vapeur ou d'électricité, en disposant des surfaces d'échange dans la boucle de circulation de la masse active ou sur les effluents gazeux en aval des réactions de combustion ou d'oxydation.

Le brevet US 5 447 024 décrit par exemple un procédé de combustion en boucle chimique comprenant un premier réacteur de réduction d'une masse active à l'aide d'un gaz réducteur et un second réacteur d'oxydation permettant de restaurer la masse active dans son état oxydé par une réaction d'oxydation avec de l'air humide. La technologie du lit fluidisé circulant est utilisée pour permettre le passage continu de la masse active de son état oxydé à son état réduit.

La masse active, passant alternativement de sa forme oxydée à sa forme réduite et inversement, décrit un cycle d'oxydo-réduction.

Ainsi, dans le réacteur de réduction, la masse active ($M_xO_y$) est tout d'abord réduite à l'état $M_xO_{y-2n-m/2}$, par l'intermédiaire d'un hydrocarbure $C_nH_m$, qui est corrélativement oxydé en $CO_2$ et $H_2O$, selon la réaction (1), ou éventuellement en mélange CO + $H_2$ selon les proportions utilisées.

$$C_nH_m + M_xO_y \rightarrow n\ CO_2 + m/2\ H_2O + M_xO_{y-2n-m/2} \qquad (1)$$

Dans le réacteur d'oxydation, la masse active est restaurée à son état oxydé ($M_xO_y$) au contact de l'air selon la réaction (2), avant de retourner vers le premier réacteur.

$$M_xO_{y-2n-m/2} + (n+m/4)\ O_2 \rightarrow M_xO_y \qquad (2)$$

Dans les équations ci-dessus, M représente un métal.

L'efficacité du procédé de combustion en boucle chimique (CLC) en lit fluidisé circulant repose dans une large mesure sur les propriétés physico-chimiques de la masse active d'oxydo-réduction.

La réactivité du ou des couples oxydo-réducteurs mis en jeu ainsi que la capacité de transfert d'oxygène associée sont des paramètres qui influent sur le dimensionnement des réacteurs et sur les vitesses de circulation des particules. La durée de vie des particules quant à elle dépend de la résistance mécanique des particules ainsi que de leur stabilité chimique.

Afin d'obtenir des particules utilisables pour ce procédé, les particules mises en jeu sont généralement composées d'un couple oxydo-réducteur choisi parmi CuO/Cu, $Cu_2O$/Cu, NiO/Ni, $Fe_2O_3$/$Fe_3O_4$, FeO/Fe, $Fe_3O_4$/FeO, $MnO_2$/$Mn_2O_3$, $Mn_2O_3$/$Mn_3O_4$, $Mn_3O_4$/MnO, MnO/Mn, $Co_3O_4$/CoO, CoO/Co, ou une combinaison de plusieurs de ces couples oxydo-réducteurs, et parfois d'un liant apportant la stabilité physico-chimique nécessaire.

Le couple NiO/Ni est souvent cité comme masse active de référence pour le procédé CLC pour ses capacités de transport d'oxygène et sa cinétique rapide de réduction, notamment en présence de méthane, malgré la toxicité importante de l'oxyde de nickel (celui-ci étant classé comme substance CMR1 : Cancérigène, Mutagène ou toxique pour la Reproduction de classe 1), entrainant notamment des contraintes importantes sur le système de filtration des fumées, et malgré son coût élevé. En effet, comme l'oxyde de nickel n'existe pas à l'état naturel de façon suffisamment concentrée pour pouvoir obtenir des propriétés intéressantes pour le procédé CLC, il est généralement utilisé de façon concentrée dans des particules de masse active synthétique dont le cout de fabrication est important.

D'une façon plus générale, une problématique principale soulevée par la mise en oeuvre d'un procédé CLC est le coût de la masse active. Le procédé CLC nécessitant la circulation du solide dans des réacteurs où les vitesses de gaz sont relativement élevées, on ne peut empêcher une consommation continue de solide par attrition. Si le coût de masse active est relativement élevé, alors le poste d'appoint en masse active peut devenir une part importante du coût opératoire. Ceci est particulièrement vrai pour les particules synthétiques dont le coût de fabrication est élevé.

Il est donc important de trouver une masse active à faible coût afin de diminuer l'impact du coût des particules sur le prix de captage du $CO_2$ par CLC.

On connait par ailleurs l'utilisation de minerais naturels en tant que masse active pour le procédé CLC, tels que des minerais d'ilménite ou de manganèse, qui peuvent constituer une solution satisfaisante en termes de coût.

Cependant, l'utilisation de tels minerais est généralement moins bien adaptée à la combustion de charges gazeuses telles que le méthane qu'à la combustion de charges solides ou liquides, en termes de performance du procédé.

Il existe ainsi un besoin de fournir un procédé CLC performant, notamment en termes de conversion de la charge, adapté au traitement d'une charge hydrocarbonée gazeuse, et qui peut mettre en oeuvre un matériau en tant que masse active oxydo-réductrice peu coûteux, et répondant aux normes environnementales en termes de toxicité et d'émissions réductrices.

**Résumé de l'invention**

Pour notamment répondre à ce besoin, les demandeurs ont développé un réacteur comprenant deux zones intégrées thermiquement : une zone de pré-reformage de la charge gazeuse et la zone de réduction, ou la zone d'oxydation, de la boucle chimique de combustion.

La mise en oeuvre d'un tel réacteur dans le procédé CLC permet de convertir tout ou partie de la charge hydrocarbonée gazeuse en gaz de synthèse (CO + $H_2$) dans la zone de pré-reformage, avant sa combustion dans la zone de réduction, en utilisant la chaleur des réactions de la boucle CLC. La cinétique de réaction du gaz de synthèse avec le transporteur d'oxygène étant plus élevée que celle de la charge hydrocarbonée gazeuse avec le transporteur d'oxygène, les performances du procédé CLC sont améliorées. En outre, le gaz de synthèse ayant une bonne réactivité avec la plupart des matériaux transporteur d'oxygène, et en particulier avec des minerais peu coûteux, il est alors possible de minimiser les couts liés à la masse active oxydo-réductrice tout en fournissant un procédé CLC performant en termes de conversion de la charge. En effet, malgré le fait que les minerais ne présentent généralement pas une activité catalytique suffisante pour induire un reformage in-situ de la charge hydrocarbonée, c'est-à-dire un reformage dans la zone de réduction, tel que ce serait le cas par exemple avec l'oxyde de nickel, la présente invention permet toutefois d'assurer efficacement le reformage de la charge.

Ainsi, la présente invention porte, selon un premier aspect, sur une installation de combustion d'une charge hydrocarbonée gazeuse par oxydo-réduction en boucle chimique, comprenant :

- une zone de pré-reformage comportant une entrée pour la charge hydrocarbonée gazeuse, une alimentation en un gaz oxydant de reformage, une sortie pour un mélange gazeux comprenant du gaz de synthèse, et un catalyseur fixe de la réaction de reformage ;
- une zone de réduction munie de moyens d'injection d'un gaz de fluidisation, d'une alimentation en ledit mélange gazeux, d'une entrée pour une masse active oxydo-réductrice sous forme de particules, et d'une évacuation pour un effluent gazeux et pour la ladite masse active oxydo-réductrice ;
- une zone d'oxydation munie d'une alimentation en ladite masse active oxydo-réductrice issue de la zone de réduction, de moyens d'injection d'un gaz de fluidisation oxydant, d'une évacuation d'un gaz oxydant appauvri et de ladite masse active oxydo-réductrice ;

dans laquelle ladite zone de pré-reformage et ladite zone d'oxydation ou ladite zone de pré-reformage et ladite zone de réduction sont intégrées thermiquement dans un même réacteur en étant séparées par au moins une paroi de séparation

thermiquement conductrice.

Selon un mode de réalisation de l'invention, le réacteur comprend la zone de pré-reformage et la zone de réduction.

Selon un autre mode de réalisation de l'invention, le réacteur comprend la zone de pré-reformage et la zone d'oxydation.

Selon un mode de réalisation de l'invention, le réacteur comprend en son centre ladite zone de réduction ou ladite zone d'oxydation entourée d'une enveloppe rigide, ladite enveloppe étant composée, du centre vers la périphérie du réacteur, d'une première couche formée d'un matériau anti-abrasion thermiquement conducteur et d'une deuxième couche composée d'un matériau réfractaire, ladite zone de pré-reformage étant intégrée à ladite enveloppe.

Selon une variante de ce mode de réalisation, la paroi de séparation thermiquement conductrice comprend au moins la première couche de l'enveloppe du réacteur.

Selon une autre variante de ce mode de réalisation, la zone de pré-reformage comprend au moins une enceinte délimitée par une paroi composée d'une première partie en contact avec la zone de réduction et d'une deuxième partie en contact la première ou deuxième couche de l'enveloppe du réacteur, et dans laquelle la première partie en contact avec la zone de réduction constitue la paroi de séparation thermiquement conductrice.

Selon ce mode de réalisation, la zone de pré-reformage peut comprendre un ensemble de tubes métalliques disposés verticalement autour de la zone de réduction/oxydation.

Selon un mode de réalisation de l'invention, la zone de pré-reformage est intégrée aux moyens d'injection du gaz de fluidisation de la zone de réduction, et est de préférence constituée par une couronne d'injection du gaz de fluidisation.

Selon un mode de réalisation de l'invention, le catalyseur de la réaction de reformage est un lit fixe d'un catalyseur sous forme de particules, tel qu'un catalyseur comprenant du nickel.

Selon un mode de réalisation de l'invention, le catalyseur de la réaction de reformage est un interne fixe contenu dans la zone de pré-reformage, tel qu'une mousse de nickel ou un ensemble d'ailettes ou de chicanes disposées sur une face interne de la zone de pré-reformage.

De préférence, la paroi thermiquement conductrice a une conductivité thermique supérieure à 0,1 W/(m.K), de préférence supérieure à 1 W/(m.K).

Selon un deuxième aspect, l'invention porte sur procédé de combustion d'une charge hydrocarbonée gazeuse par oxydo-réduction en boucle chimique mis en oeuvre dans l'installation selon l'invention, dans lequel :

- on envoie la charge hydrocarbonée gazeuse dans une zone de pré-reformage comprenant un catalyseur fixe pour effectuer le reformage catalytique de ladite charge hydrocarbonée au contact d'un gaz oxydant de reformage, tel que la vapeur d'eau ou du $CO_2$, et produire un mélange gazeux comportant du gaz de synthèse ;
- on envoie ledit mélange gazeux dans une zone de réduction opérant en lit fluidisé pour effectuer la combustion du dit mélange gazeux au contact d'une masse active oxydo- réductrice sous forme de particules;
- on oxyde les particules de la masse active oxydo-réductrice issues de la zone de réduction par mise en contact avec un flux de gaz oxydant dans une zone d'oxydation opérant en lit fluidisé; et
- on transfère la chaleur du lit fluidisé de la zone de réduction ou de la zone d'oxydation vers la zone de pré-reformage au moyen d'au moins une paroi thermiquement conductrice séparant ladite zone de pré-reformage de ladite zone de réduction ou de ladite zone d'oxydation.

De préférence, la température du lit fluidisé de la zone de réduction et de la zone d'oxydation, circulant entres lesdites zones de réduction et d'oxydation, est comprise entre 700°C et 1100°C, et la chaleur transférée dudit lit fluidisé vers la zone de pré-reformage est telle que la température dans ladite zone de pré-reformage est favorable à la réaction de reformage catalytique de la charge hydrocarbonée gazeuse, ladite température étant de préférence comprise entre 650°C et 1000°C.

Selon une mise en oeuvre de l'invention, le transfert de chaleur est réalisé de la zone de réduction vers la zone pré-reformage, et on envoie le gaz oxydant de reformage, la charge hydrocarbonée gazeuse, et éventuellement un gaz supplémentaire de fluidisation, dans des moyens de fluidisation de la zone de réduction, de préférence dans une couronne d'injection de gaz, et on opère le reformage de ladite charge au sein desdits moyens de fluidisation constituant la zone de pré-reformage.

De préférence, la charge hydrocarbonée gazeuse comprend essentiellement du méthane, et le reformage de la charge au sein de la zone de pré-reformage est opéré en présence d'un catalyseur de reformage du méthane comprenant du nickel.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

## Brève description des figures

La figure 1 est une représentation schématique d'une installation CLC selon un premier mode de réalisation de l'invention, comportant une zone de réduction et une zone de pré-reformage intégrées dans un réacteur.
La figure 2 est une représentation schématique d'une installation CLC selon un deuxième mode de réalisation de l'invention, comportant une zone d'oxydation et une zone de pré-reformage intégrées dans un réacteur.
La figure 3 est un schéma illustrant un exemple de réacteur selon le premier mode de réalisation de l'invention.
La figure 4 est un schéma illustrant un autre exemple de réacteur selon le premier mode de réalisation de l'invention.
La figure 5 est un schéma illustrant encore un autre exemple de réacteur selon le premier mode de réalisation de l'invention.
La figure 6 est une représentation schématique d'une installation CLC selon l'art antérieur.

Sur les figures, les mêmes références désignent des éléments identiques ou analogues.

## Description de l'invention

Il convient de noter que, dans la présente description, on entend par « pré-reformage » de la charge hydrocarbonée gazeuse, un reformage qui a lieu en amont de la zone de réduction, par opposition à un reformage in-situ, entendu ici comme un reformage de la charge au sein de la zone de réduction. On rappelle que la zone de réduction doit être comprise ici, en relation avec la définition du procédé CLC déjà donnée plus haut, comme la zone réactionnelle dans laquelle la masse oxydo-réductrice est réduite. La réaction de reformage est détaillée plus bas, en relation avec la description de la figure 1.

Dans la présente description, les expressions « matériau transporteur d'oxygène », « porteur d'oxygène », et « masse active oxydo-réductrice » sont équivalentes. La masse oxydo-réductrice est dite active en rapport avec ses capacités réactives, dans le sens où elle est apte à jouer son rôle de transporteur d'oxygène dans le procédé CLC en captant et relarguant de l'oxygène. L'expression abrégée « masse active » ou le terme « solide » pourront être également utilisés.

Dans le procédé CLC selon l'invention, les charges hydrocarbonées utilisées sont des charges hydrocarbonées gazeuses, de préférence composées essentiellement de méthane, par exemple du gaz naturel ou un biogaz.

La figure 1 est un schéma de principe simplifié de l'installation CLC selon un premier mode de réalisation de l'invention.

L'installation de combustion en boucle chimique 1000 comprend une zone d'oxydation 110, aussi appelé réacteur d'oxydation ou « réacteur air », dont la fonction est d'oxyder un porteur d'oxygène 10 sous formes de particules, en provenance d'une zone de réduction 120, aussi appelée réacteur de réduction ou « réacteur fuel », dont la fonction est de réaliser la réduction du porteur d'oxygène au contact d'un charge gazeuse pour libérer l'oxygène du porteur et effectuer la combustion de la charge. Les deux réacteurs opèrent en lit fluidisé, et le porteur d'oxygène circule entre les deux zones pour former la boucle de la combustion en boucle chimique. Les flèches entre les deux zones de réactions 110 et 120 représentent schématiquement les lignes de transport dans lesquelles circule le porteur d'oxygène (10, 13). Il est entendu que ces lignes de transport peuvent comporter divers dispositifs, parmi lesquels on peut citer, sans être exhaustif, des dispositifs de contrôle du flux de solide, tels que des vannes, des dispositifs de séparation gaz/solide, des dispositifs d'élutriation, des dispositifs d'échange de chaleur, ou des éléments d'étanchéité tels que des siphons.

Le porteur d'oxygène 10 provenant de la zone de réduction 120 est dans un état tout ou partiellement réduit, et réagit, au sein de la zone d'oxydation 110, au contact d'un flux de gaz oxydant 11, tel que de l'air, selon la réaction (2) décrite plus haut. Il en résulte un flux de gaz oxydant appauvri en oxygène 12, par exemple de l'air appauvri, et un flux de solide porteur d'oxygène à nouveau oxydé 13. Le flux de gaz oxydant appauvri en oxygène 12 et le flux de solide 13 sont généralement évacués au somment de la zone d'oxydation par une même sortie, puis envoyés dans au moins un dispositif de séparation gaz/solide (non représenté) permettant de séparer le flux de gaz 12 du flux de solide 13 qui est à nouveau vers la zone de réduction 120. La zone d'oxydation est ainsi munie d'une alimentation en porteur d'oxygène issu de la zone de réduction 120, de moyens d'injection du gaz oxydant 11 permettant la fluidisation des particules du porteur, d'une évacuation d'un gaz oxydant appauvri en oxygène 12 et du porteur d'oxygène oxydé 13.

Le solide porteur d'oxygène 13 est acheminé vers la zone de réduction 120. La fonction de cette zone est de réaliser la combustion d'un combustible formé par une charge gazeuse 14, par la mise en contact de cette charge avec le porteur d'oxygène 13 qui libère, par réduction du porteur, l'oxygène jouant le rôle de comburant. La réaction globale est la réaction (1) résumée plus haut. Plus en détail, dans le cas de la conversion des charges hydrocarbonées gazeuses dans un procédé CLC, comme dans la présente invention, deux étapes peuvent être distinguées. Tout d'abord, la molécule d'hydrocarbure est transformée en un gaz de synthèse sur le porteur d'oxygène selon l'équation (3), puis le

gaz de synthèse formé est oxydé sur le porteur d'oxygène en CO et $H_2$ selon les équations (4) et (5). Les réactions de conversion du gaz de synthèse selon les équations (4) et (5) présentent une cinétique très élevée en comparaison à la réaction de formation de ce gaz de synthèse selon l'équation (3).

$$C_nH_m + nM_xO_y \rightarrow nCO + \frac{m}{2}H_2 + nM_xO_{y-1} \quad (3)$$

$$CO + M_xO_y \rightarrow CO_2 + M_xO_{y-1} \quad (4)$$

$$H_2 + M_xO_y \rightarrow H_2O + M_xO_{y-1} \quad (5)$$

La zone de réduction 120 est alimentée par un gaz de fluidisation 15, typiquement de la vapeur d'eau, qui peut également avoir comme fonction de favoriser la conversion de la charge. Le gaz de fluidisation peut aussi être du $CO_2$, ou un mélange de vapeur d'eau et de $CO_2$. Il résulte des réactions dans cette zone de réduction 120 un flux de fumées 16 comprenant quasi exclusivement du $CO_2$ et de l'$H_2O$, destiné au captage et au stockage du $CO_2$, et un flux de solide porteur d'oxygène réduit 10 destiné à être acheminé vers la zone d'oxydation 110 pour y être à nouveau oxydé, bouclant ainsi la boucle de la combustion en boucle chimique. Les fumées 16 et le flux de solide 10 sont généralement évacués au sommet de la zone de réduction par une même sortie, puis envoyés dans un dispositif de séparation gaz/solide (non représenté) permettant de séparer les fumées 16 du flux de solide qui est à nouveau vers la zone d'oxydation 110. La zone de réduction 120 comprend ainsi des moyens d'injection du gaz de fluidisation 15, une alimentation en combustible gazeux, une entrée pour le porteur d'oxygène 13, et une évacuation pour l'effluent gazeux 16 produit lors de la combustion et le porteur d'oxygène réduit 10.

Le lit fluidisé de la zone d'oxydation a une température généralement comprise entre 700°C et 1100°C. Le porteur d'oxygène transféré dans la zone de réduction 120 est également en lit fluidisé à une température généralement comprise entre 700°C et 1100°C. Typiquement, les temps de réaction requis pour effectuer les réactions de réduction, comme pour les réactions d'oxydation dans le réacteur d'oxydation, dépendent de la nature des charges traitées et des oxydes métalliques utilisés et peuvent aller de la seconde à une dizaine de minutes environ. Pour la combustion de charges gazeuses selon l'invention, le temps de contact dans la zone de réduction varie typiquement entre 1 seconde et 1 minute, de préférence entre 1 et 20 secondes. Le ratio entre la quantité de masse active en circulation et la quantité d'oxygène à transférer entre les deux zones réactionnelles est avantageusement compris entre 30 et 100, de préférence entre 40 et 70.

Le procédé CLC fonctionne typiquement à basse pression. Cette basse pression favorise les réactions de reformage, et permet par exemple de minimiser le coût énergétique de compression des gaz le cas échéant, par exemple de l'air utilisé dans le réacteur d'oxydation, et maximiser ainsi le rendement énergétique de l'installation.

Le bilan des chaleurs des réactions ayant eu lieu dans les zones 110 et 120 est égal au pouvoir calorifique de la charge 14, de la même manière que si l'on en avait effectué la combustion dans un procédé de combustion classique.

Selon l'invention, il est avantageusement fait usage d'au moins une partie de cette capacité calorifique pour réaliser une réaction de reformage catalytique de la charge hydrocarbonée gazeuse avant son introduction dans la zone de réduction 120 de la boucle chimique.

Ainsi, une troisième zone réactionnelle 130 est implantée dans l'installation CLC, et est destinée au reformage catalytique de tout ou partie de la charge hydrocarbonée gazeuse brute 17. Il s'agit, dans la zone 130, de mettre en contact la charge gazeuse hydrocarbonée 17, en mélange avec un gaz ayant des propriétés oxydantes 18, tel que de la vapeur d'eau ou du $CO_2$, et avec un catalyseur adapté. La réaction de reformage catalytique permet la formation de gaz de synthèse ($H_2$ + CO), par exemple selon l'équation (6) ci-dessous avec de la vapeur d'eau, aussi appelée réaction de reformage à la vapeur ou vaporéformage. La réaction selon l'équation (7) ci-dessous avec du $CO_2$ (reformage dit « sec ») peut également se produire.

$$C_nH_m + nH_2O \xleftrightarrow{Catalyseur} nCO + (n + \frac{m}{2})H_2 \quad (6)$$

$$C_nH_m + nCO_2 \xleftrightarrow{Catalyseur} 2nCO + \frac{m}{2}H_2 \quad (7)$$

La charge gazeuse 14 envoyée dans la zone de réduction 120 est alors enrichie en gaz de synthèse par rapport à la charge hydrocarbonée brute 17, ce qui permet d'améliorer la cinétique globale de la transformation de la charge en vapeur d'eau et $CO_2$ au contact de la masse active oxydo-réductrice dans la zone de réduction (voir équations 3, 4, 5 ci-dessus). L'alimentation est un gaz de fluidisation spécifique 15 peut être facultative si le flux gaz oxydant 18, e.g. la vapeur d'eau, est tel qu'il permet d'assurer la fluidisation dans la zone 120 lorsque la charge 14, comprenant le gaz de synthèse produit par reformage, la charge hydrocarbonée brute 17 résiduelle et le gaz oxydant 18 n'ayant pas réagi, est envoyée dans la zone 120.

La vapeur d'eau envoyée dans la zone 130 en tant que gaz oxydant 18 pour la réaction de reformage peut avoir été générée dans des zones d'échange thermique au sein de l'installation CLC, par exemple dans un échangeur de chaleur placé sur le trajet de la masse active oxydo-réductrice dans la boucle tel que sur une ligne de transport entre les réacteurs d'oxydation et de réduction, ou dans des zones d'échange thermique en aval de la boucle CLC, au contact des fumées 12. L'eau peut être externe au procédé, ou par exemple provenir de la condensation des fumées 12. Si du $CO_2$ est utilisé en tant que gaz oxydant 18 dans la zone 130, celui-ci peut provenir des fumées 12 et en être extrait au niveau de la chaine de compression du $CO_2$ à destination du transport/stockage, située en aval de la zone de réduction 120. Un mélange d'eau et de $CO_2$ peut être également utilisé en tant que gaz oxydant 18, et peut par exemple provenir d'un recyclage des fumées 12 en sortie de la zone de réduction.

On utilisera tout type de catalyseur adapté au reformage de la charge hydrocarboné gazeuse, généralement bien connus de l'homme du métier. Par exemple, et sans limitation aucune, on utilise un catalyseur à phase active à base de nickel dans le cas où on souhaite réaliser le reformage d'une charge comprenant majoritairement du méthane au contact de vapeur d'eau, selon la réaction bien connue de vaporéformage du méthane (VMR), ou « Steam Methane Reforming » (SMR) en anglais. Cette réaction est fortement endothermique et nécessite un apport d'énergie. Dans les procédés industriels classiques dédiés au reformage, on a généralement recours à deux modes d'apport d'énergie : soit l'introduction d'oxygène libre dans le milieu réactionnel pour effectuer une oxydation partielle de la charge dont l'exotherme compensera l'endothermicité de la réaction de reformage (reformage autotherme), soit le recours à un chauffage externe.

Selon la présente invention, on utilise la chaleur produite par la boucle CLC, dans laquelle la température du lit fluidisé circulant est comprise entre 700°C et 1100°C, pour fournir l'énergie nécessaire à la réaction de reformage catalytique. Les niveaux de température du lit fluidisé circulant sont en effet compatibles avec les températures d'opération classique des réactions de reformage catalytique. Typiquement, la température de la réaction de reformage catalytique dans la zone 130 est comprise entre 650°C et 1000°C, de préférence entre 700°C et 900°C.

Pour cela, la zone de réduction 120 et la zone de pré-reformage 130 sont intégrées thermiquement dans un même réacteur 100 en étant séparées par une paroi de séparation thermiquement conductrice 140. La présence d'une telle surface d'échange de chaleur permet d'induire un transfert de chaleur de la zone de réduction 120 à la zone de pré-reformage 130, figuré par une flèche entre les deux zones dans la figure 1. Ce transfert de chaleur n'est pas pénalisant pour le procédé CLC, car le bilan thermique global de la combustion en boucle chimique, en incluant le pré-reformage, c'est-à-dire le bilan des chaleurs de réactions dans les zones réactionnelles 110, 120 et 130, correspond pouvoir calorifique de la charge hydrocarbonée brute 17.

La paroi thermiquement conductrice 140 a de préférence une conductivité thermique supérieure à 0.1 W/(m.K), de préférence supérieure à 1 W/(m.K). Cette paroi peut être multiple, en étant par exemple formée par une paroi propre à chacune des deux zones de réaction et délimitant chaque zone de réaction en tant que telle, soit deux parois. Un exemple de représentation pour un tel cas est donné à la figure 3, décrite plus loin. La paroi thermiquement conductrice peut également être multiple en ce sens qu'elle est formée par plusieurs matériaux distincts, par exemple sous forme de couches successives de nature distincte.

La masse oxydo-réductrice peut être composée d'oxydes métalliques, tels que par exemple des oxydes de Fe, Ti, Ni, Cu, Mn, Co, V, seuls ou en mélange, pouvant provenir de minerais, par exemple l'ilménite ($FeTiO_3$) ou un minerai naturel de manganèse, comme la pyrolusite ($MnO_2$), ou être synthétiques (par exemple des particules d'oxyde de fer supportées sur alumine $Fe_2O_3/Al_2O_3$), avec ou sans liant, et présente les propriétés d'oxydo-réduction requises et les caractéristiques nécessaires à la mise en oeuvre de la fluidisation.

Avantageusement, la masse oxydo-réductrice provient de minerais, généralement moins couteux que les particules synthétisées. Selon l'invention, le pré-reformage permet en effet d'utiliser ce type de masse active étant donné que le gaz de synthèse issu du reformage présente une bonne réactivité avec la plupart des matériaux transporteur d'oxygène. Le minerai peut être préalablement broyé et tamisé afin d'obtenir une masse active de granulométrie compatible avec une mise en oeuvre en lit fluidisé.

La capacité de stockage en oxygène de la masse oxydo-réductrice est avantageusement comprise, suivant le type de matériau, entre 1 % et 15 % poids. Avantageusement, la quantité d'oxygène effectivement transférée par l'oxyde métallique est comprise entre 1 et 3 % poids, ce qui permet de n'utiliser qu'une fraction de la capacité de transfert d'oxygène, idéalement moins de 30 % de celle-ci afin de limiter les risques de vieillissement mécanique ou d'agglomération des particules. L'utilisation d'une fraction seulement de la capacité de transport en oxygène a également pour

avantage que le lit fluidisé joue un rôle de ballast thermique et lisse ainsi les variations de températures imposées par les réactions.

La masse active est sous la forme de particules fluidisables, appartenant aux groupes A ou B de la classification de Geldart. A titre d'exemple, et de manière non limitative, les particules de la masse active oxydo-réductrice peuvent appartenir au groupe B de la classification de Geldart, et présenter une granulométrie telle que plus de 90 % des particules ont une taille comprise entre 50 $\mu$m et 500 $\mu$m (diamètre moyen de Sauter), de préférence comprise entre 100 $\mu$m et 300 $\mu$m, pour une densité comprise entre 1 000 kg/m$^3$ et 6 000 kg/m$^3$ et préférentiellement entre 1 500 kg/m$^3$ et 5 000 kg/m$^3$.

La masse active oxydo-réductrice peut subir une phase d'activation de manière à augmenter ses capacités réactives, pouvant consister en une phase de montée en température, de préférence progressive, et de préférence sous atmosphère oxydante, par exemple sous air.

La figure 2 représente un schéma de principe simplifié de l'installation CLC selon un deuxième mode de réalisation de l'invention.

L'installation CLC 2000 est identique à celle décrite en relation avec la figure 1, à l'exception que ce sont la zone d'oxydation 110 et la zone de pré-reformage 130 qui sont intégrées dans un même réacteur 200, et non la zone de réduction 120 et la zone de pré-reformage 130 comme dans l'installation 1000. Selon ce mode de réalisation, le transfert de chaleur se fait de la zone d'oxydation 110 vers la zone de pré-reformage par le biais de la paroi de séparation thermiquement conductrice 140 entre les deux zones réactionnelles. Un avantage à ce mode de réalisation est l'accès à des températures généralement supérieures dans la zone d'oxydation 110 à celles rencontrées dans la zone de réduction 120.

Les figures 3 à 5 sont des coupes schématiques, montrant diverses configurations du réacteur intégrant les deux zones réactionnelles pré-reformage/réduction d'une installation CLC selon le premier mode de réalisation l'invention. Dans ces figures, seule la partie basse du réacteur est représentée.

La figure 3 illustre un exemple de réacteur 300 dans lequel la zone de pré-reformage est noyée dans la masse de l'enveloppe du réacteur. Selon ce mode de réalisation, le réacteur 300 comprend en son centre la zone de réduction 320 entourée d'une enveloppe rigide. La zone de réduction 320 comporte à sa base une couronne de fluidisation 321 alimentée par le gaz de fluidisation 15. L'enveloppe est une structure composée de plusieurs matériaux, qui peuvent avoir différentes fonctions. L'enveloppe est composée, du centre vers la périphérie du réacteur 300, d'une couche 340 thermiquement conductrice formée d'un matériau anti-abrasion et d'une couche 322 comprenant un matériau réfractaire.

Le matériau formant la couche 322 est un matériau réfractaire, tel que le béton, le béton à basse teneur en ciment, les produits alumineux de type béton, les produits alumino-silicés de type béton, les papiers réfractaires, les panneaux ou nappes de fibres réfractaires tels que la laine de roche, les fibres silice-calcium ou les fibres silice magnésie, les fibres en vrac, ou encore les briques réfractaires comme les briques d'alumine (teneur supérieure à 99%), capable de supporter des températures très importantes, correspondant aux températures du lit fluidisé, c'est-à-dire des températures supérieures à 700°C et pouvant atteindre plus de 1000°C. Cette couche 322 a une fonction d'isolation thermique, et peut présenter une épaisseur variable, par exemple de l'ordre de 0,01 m à 1 m, selon le ou les matériaux choisis, de manière à remplir son rôle d'isolant thermique. Cette épaisseur dépend aussi de la température acceptable pour la paroi du réacteur.

La couche 340, en contact avec le lit fluidisé de la zone de réduction 320, a une fonction de protection contre l'abrasion provoquée la circulation des particules du lit fluidisé. Typiquement, la couche 340 est composée de béton dense, pouvant comporter une structure métallique formant un réseau permettant de renforcer la résistance mécanique du béton, telle qu'une structure de type Hexmesh™.

La couche 340 permet le passage de la chaleur de la zone de réduction 320 à la zone de pré-reformage 330 de manière à obtenir dans la zone 330 les conditions adéquates pour la réalisation de la réaction de reformage catalytique de la charge hydrocarbonée brute (non représentée). De préférence, la couche 340 a une conductivité thermique supérieure à 0,1 W/(m.K), de préférence supérieure à 1 W/(m.K) à la température du procédé.

Selon ce mode de réalisation, la zone de pré-reformage est intégrée dans l'enveloppe du réacteur 300, et est positionnée derrière la couche 340 de protection anti-abrasion. Cette configuration permet de préserver l'intégrité du réacteur de pré-reformage 330 en ne l'exposant pas à l'abrasion du lit fluidisé, tout en pénalisant peu le transfert thermique vers la zone 330 du fait de la faible résistance au transfert thermique de la couche anti abrasion.

La zone de pré-reformage est par exemple formée par un ensemble de réacteurs cylindriques, tel qu'un ensemble de tubes métalliques disposés verticalement autour de la zone de réduction 320. D'autres formes des réacteurs de pré-reformage intégrées dans l'enveloppe du réacteur 300 est possible, tel qu'un réacteur annulaire disposé autour de la zone de réduction 320, sur toute sa hauteur.

Dans le cas où la zone de pré-reformage comprend une enveloppe qui lui est propre, par exemple formée de métal, ladite enveloppe devra également être thermiquement conductrice à la manière de la couche anti-abrasion 340, pour former la paroi thermiquement conductrice assurant le transfert thermique de la zone de réduction 320 vers la zone 330.

Le mélange gazeux 14 comprenant la charge hydrocarbonée gazeuse et le gaz de synthèse produit par reformage dans la zone 330 est dirigé depuis la zone 330 vers un interne 323 de la zone de réduction 320, dédié à son injection dans la zone de réduction 320.

Selon un autre exemple illustré à la figure 4, le réacteur est en tout point identique à celui décrit en relation avec la figure 3, à l'exception que la zone de pré-reformage 330 n'est pas positionnée derrière la couche anti-abrasion, mais est au contact du lit fluidisé de la zone de réduction 320. La zone de pré-reformage 330, qui n'est pas ouverte sur la zone 320 et reste une zone de réaction distincte de la zone 320, comprend au moins une enceinte délimitée par une paroi dont une partie est en contact avec le lit fluidisé de la zone de réduction 320, et l'autre partie est en contact la couche de matériau réfractaire 322 et/ou la couche anti-abrasion (non représentée). Ainsi, dans la cas où la zone de pré-reformage est un ensemble de tubes métalliques disposés verticalement autour de la zone de réduction 320, une partie de tubes est en contact avec le lit fluidisé dans 320, une autre est noyée dans la masse de l'enveloppe du réacteur 400. La paroi de la zone de pré-reformage 330 en contact avec le lit fluidisé constitue alors la paroi de séparation thermiquement conductrice 440, permettant le transfert de la chaleur du lit fluidisé de la zone 320 vers la zone de pré-reformage.

Selon la présente invention, le réacteur tel qu'illustré à la figure 3 ou à la figure 4 peut également être le réacteur d'oxydation de la boucle CLC, selon le deuxième mode de réalisation décrit plus haut, intégrant la zone d'oxydation et la zone de pré-reformage. La description relative aux figures 3 et 4 reste valable pour cette autre configuration, excepté que la zone de réduction 320 est remplacée par la zone d'oxydation 110, alimentée, via la couronne d'injection 321 par de l'air 11 à la place d'un gaz de fluidisation 15. Selon cette configuration, le mélange gazeux comprenant le gaz de synthèse, issu de la zone de pré-reformage, n'est pas injecté dans le réacteur d'oxydation mais dirigé vers la zone de réduction. L'interne 323 n'est donc pas présent.

La figure 5 représente un autre exemple de réacteur dans lequel la zone de pré-reformage est intégrée aux moyens d'injection du gaz de fluidisation de la zone de réduction. Cet exemple de configuration n'est possible que dans une installation CLC selon le premier mode de réalisation l'invention, où ce sont les zone de réduction et de pré-reformage qui sont intégrées dans un même réacteur.

Le réacteur 500 est identique au réacteur décrit en relation avec les figures 3 et 4, à l'exception que la zone de pré-reformage n'est pas inclue au moins partiellement dans l'enveloppe du réacteur 500, mais est contenue dans les moyens de fluidisation de la zone de réduction 520. Ainsi, la zone de pré-reformage 530 peut être la couronne d'injection du gaz de fluidisation. Cette couronne est alimentée par la charge hydrocarbonée brute 17 et par le gaz aux propriétés oxydantes 18, e.g. la vapeur d'eau. Les flux de gaz 18 et 17 peuvent être tels qu'ils permettent la fluidisation dans la zone 520, et dans ce cas l'injection d'un gaz supplémentaire 15 pour la fluidisation peut ne pas être nécessaire. La couronne d'injection peut contenir des chicanes internes ou de la mousse métallique pour augmenter la surface de contact entre les réactifs et la paroi qui catalyse la réaction.

Dans tous les exemples décrits de réacteur intégrant la zone de pré-reformage et la zone de réduction ou d'oxydation, le catalyseur de reformage de la zone de pré-reformage peut être sous plusieurs formes.

Selon un mode de réalisation préférée, le catalyseur de reformage est sous forme un lit fixe de particules.

Les particules peuvent être des particules catalytiques monométalliques supportées sur différents oxydes métalliques, tel que, sans être limitatif, de l'alumine $Al_2O_3$, de l'oxyde de calcium CaO, de l'oxyde de magnésium MgO, des oxydes mixtes comme $Al_2O_3$-CaO. De préférence, les particules sont à base de nickel en tant que phase active, et comprennent préférentiellement de 6% à 25% poids de nickel, par exemple sur un support comprenant majoritairement de l'alumine $Al_2O_3$. Un tel catalyseur comprenant du nickel supporté sur de l'alumine est typiquement utilisé pour la production d'hydrogène, et est généralement utilisé avec de la vapeur d'eau en excès afin de limiter la formation de coke sur le catalyseur. Dans un tel cadre de production industrielle d'hydrogène, le rapport molaire entre la vapeur et le carbone contenu dans la charge (ratio S/C pour steam/carbon) est généralement compris entre 2,5 et 3,5, de préférence entre 3 et 3,5, afin de garantir la durée de vie du catalyseur. De telles conditions sont également souhaitables pour le pré-reformage selon l'invention. Pour le pré-reformage selon l'invention, des rapports S/C inférieurs peuvent suffire, par exemple un rapport S/C d'au moins 1,4.

Dans le cas où du $CO_2$ est utilisé en tant que gaz oxydant pour le reformage, on l'utilisera également de préférence en excès, avec un rapport molaire gaz oxydant sur carbone de la charge équivalent aux rapports S/C mentionnées ci-dessus.

Selon un autre mode de réalisation, le catalyseur est un interne fixe contenu dans la zone de pré-reformage, composé au moins en partie par un métal ayant une activité catalytique pour la réaction de reformage, tel qu'une mousse métallique, comme une mousse de nickel. Alternativement l'interne fixe peut être un ensemble d'ailettes ou de chicanes composé par ledit catalyseur métallique, par exemple du nickel ou un alliage comprenant du nickel, et disposées sur une face interne de la zone de pré-reformage.

## Exemples

Les exemples décrits ci-dessous sont basés sur des simulations de procédés utilisant le logiciel Aspen Hysys version 8.4. La méthode thermodynamique choisie est basée sur les modèles de Soave Redlich Kwong et Lee Kessler (Soave, Giorgio. "Equilibrium constants from a modified Redlich-Kwong equation of state". Chemical Engineering Science 27 (6): 1197-1203; Lee B.I., Kesler M.G., "A Generalized Thermodynamic Correlation Based on Three-Parameter Corresponding States", AIChE J., 21(3), 510-527, 1975). L'avancement des réactions de combustion est basé sur une extrapolation d'expériences menées à l'échelle du laboratoire et représentative d'un procédé CLC dans le cas d'une combustion avec pré-reformage de la charge comme selon l'invention (exemples 2 et 3), et dans le cas d'une combustion sans un tel pré-reformage, à titre comparatif (exemple 1).

*Exemple 1 selon l'art antérieur*

Le présent exemple 1 repose sur la mise en oeuvre d'une installation de combustion en boucle chimique classique pour la combustion de gaz naturel, ne comportant pas de pré-reformage de la charge selon l'invention.

Une telle installation classique est illustrée schématiquement à la figure 6. Les éléments décrits en relation avec la figure 1 sont valables pour l'installation 6000, à l'exception de ce qui est relatif à la troisième zone réactionnelle de pré-reformage de la charge 130 qui n'existe pas dans l'installation 6000. Les réacteurs air 610 et fuel 620 sont similaires aux zones réactionnelles 110 et 120 de la figure 1.

L'installation CLC 6000 comporte un lit fluidisé composé d'un oxyde porteur d'oxygène dont la phase active est de l'oxyde de manganèse, issu d'un minerai naturel de type pyrolusite. Cet oxyde a une capacité de transport dynamique d'oxygène correspondant à 1,92 % poids de sa masse.

On effectue la combustion d'une charge hydrocarbonée gazeuse 17 de type gaz naturel composée majoritairement de méthane. Le tableau 1 ci-dessous présente la composition de la charge hydrocarbonée gazeuse (en fractions molaires).

Tableau 1

| | |
|---|---|
| Methane | 0,951 |
| Ethane | 0,018 |
| Propane | 0,006 |
| n-Butane | 0,003 |
| n-Pentane | 0,001 |
| Nitrogen | 0,014 |
| Oxygen | 0,000 |
| $H_2O$ | 0,000 |
| Helium | 0,000 |
| Argon | 0,000 |
| Carbon | 0,000 |
| $CO_2$ | 0,008 |
| CO | 0,000 |
| $H_2$ | 0,000 |

Dans cet exemple on considère une chaudière de puissance théorique de chauffe de 200 $MW_{th}$, soit présentant un rendement de l'ordre de 92 % et une puissance en entrée de 217 $MW_{th}$. Cela correspond au traitement d'un flux de charge hydrocarbonée de l'ordre de 14,9 t/h.

Pour cette charge, on fait circuler un flux 13 de 2 943 t/h de solide porteur d'oxygène dans l'installation. Il est composé, sous sa forme la plus oxydée entrant dans la zone de réduction 620, quasi exclusivement de $Mn_3O_4$.

Un gaz de fluidisation 15, en l'occurrence de la vapeur d'eau, est apporté dans la zone 620 à une température de 500 C et à raison d'un flux de 23 t/h pour un rapport molaire vapeur sur carbone de 1,4.

Le gaz naturel 17 réagit au contact de la vapeur et du solide porteur d'oxygène La conversion de la charge sur ce solide est prévue pour atteindre 41% par rapport aux flux molaires de méthane, en extrapolant à l'échelle industrielle

de l'installation.

$$Conversion = \frac{\dot{n}_{CH_4\,charge} - \dot{n}_{CH_4\,effleuent}}{\dot{n}_{CH_4\,charge}} = \frac{832 - 491}{832} = 0{,}410$$

Ce degré de conversion conduit à la formation d'un effluent gazeux dont la composition en fractions molaires est donnée dans le tableau 2 ci-dessous.

Tableau 2

| | |
|---|---|
| Methane | 0,165 |
| Ethane | 0,000 |
| Propane | 0,000 |
| n-Butane | 0,000 |
| n-Pentane | 0,000 |
| Nitrogen | 0,004 |
| Oxygen | 0,000 |
| $H_2O$ | 0,694 |
| Helium | 0,000 |
| Argon | 0,000 |
| Carbon | 0,000 |
| $CO_2$ | 0,137 |
| CO | 0,000 |
| $H_2$ | 0,000 |

Il reste ainsi une fraction substantielle de méthane dans l'effluent de combustion 16 correspondant à la charge non convertie. Cela a deux conséquences sur le procédé. La première est que la puissance générée par la chaudière n'est qu'une fraction de celle attendue de 200 MWth avec une production effective de l'ordre de 90 MWth, et il en découle une impossibilité de maintenir en température le procédé de façon satisfaisante avec une température d'opération qui tombe à 798°C au lieu de la température nominale de 900°C. Le fait que cette température nominale ne soit pas atteinte indique que la conversion effective d'une installation réelle selon cet exemple 1 serait encore inférieure aux 41 %. La seconde conséquence est qu'en effectuant une conversion partielle on gaspille la charge et que l'on génère des fumées 16 contenant de grandes quantités d'hydrocarbures gazeux susceptibles de générer une atmosphère explosive à la sortie de l'unité. De plus, dans ces conditions, il n'est plus envisageable d'obtenir un débit de $CO_2$ aux spécifications requises par simple condensation de l'eau.

*Exemple 2 selon l'invention*

Cet exemple 2 se base sur une installation telle que décrite en référence à la figure 1. Les objectifs exposés dans l'exemple 1, à savoir que la puissance visée, ainsi que le porteur d'oxygène et la nature de la charge traitée, sont les mêmes pour cet exemple 2.

A la différence de l'exemple 1, on dispose ici d'une zone de pré-reformage 130, dont la fonction est de favoriser la conversion de la charge dans le réacteur 620. Cette zone 130 est alimentée en réactifs par la fourniture de 14,9 t/h de charge hydrocarbonée (gaz naturel) et 23 t/h de vapeur d'eau. La rapport S/C est de 1,4. Cette vapeur est générée dans les zones d'échange thermique du procédé, soit au contact des fumées, soit au contact du lit circulant de solide. La zone de pré-reformage comporte un lit catalytique fixe adapté au vaporéformage du méthane dont la phase active est composée de nickel. Le catalyseur est constitué de pastilles de $Ni/Al_2O_3$ (BASF SG-9301 contenant 16,5 % poids d'oxyde de nickel). Cette zone 130 est opérée à 800°C. Les réactions de vaporéformage et principalement celle du méthane sont endothermiques. La réaction de vaporéformage du méthane et son enthalpie de réaction ΔrH sont données ci-dessous.

$$CH_4 + H_2O \rightarrow CO + 3.H_2 \quad \Delta_rH = 205 \text{ kJ/mol} \qquad (8)$$

Les expériences menées au laboratoire indiquent qu'une conversion de 40% de la charge en amont de la zone de combustion 120 est suffisante pour atteindre une conversion globale du méthane supérieure à 98 %.

La mise en température et la fourniture de l'énergie de réaction pour le reformage partiel de la charge, soit 37,4 $MW_{th}$, sont assurées par conduction par les parois 140 entre la zone de combustion 120 et la zone de pré-reformage 130. Il résulte de cette étape de pré-reformage une charge reformée 14 qui a la composition en fractions molaires donnée dans le tableau 3 ci-dessous.

Tableau 3

| | |
|---|---|
| Methane | 0,169 |
| Ethane | 0,000 |
| Propane | 0,000 |
| n-Butane | 0,000 |
| n-Pentane | 0,000 |
| Nitrogen | 0,004 |
| Oxygen | 0,000 |
| $H_2O$ | 0,244 |
| Helium | 0,000 |
| Argon | 0,000 |
| Carbon | 0,000 |
| $CO_2$ | 0,051 |
| CO | 0,087 |
| $H_2$ | 0,444 |

La vapeur injectée dans la zone de pré-reformage 130 est telle qu'elle permet la fluidisation dans la zone 120, et il n'est ici pas nécessaire de compléter avec un flux additionnel 15. La charge reformée comporte une fraction importante de CO et d'$H_2$. Ces composés ont une cinétique de combustion rapide au contact d'un porteur d'oxygène. Cela permet d'atteindre une conversion globale du méthane supérieure à 98%, au vu de la composition de l'effluent 12 issu de la combustion donnée dans le tableau 4 ci-dessous.

Tableau 4

| | |
|---|---|
| Methane | 0,003 |
| Ethane | 0,000 |
| Propane | 0,000 |
| n-Butane | 0,000 |
| n-Pentane | 0,000 |
| Nitrogen | 0,003 |
| Oxygen | 0,000 |
| $H_2O$ | 0,766 |
| Helium | 0,000 |
| Argon | 0,000 |
| Carbon | 0,000 |
| $CO_2$ | 0,228 |

(suite)

| | |
|---|---|
| CO | 0,000 |
| $H_2$ | 0,000 |

Le méthane résiduel représente 159 kg/h, soit une conversion de 98,9 %. Ce niveau de conversion diminue les risque de formation d'une atmosphère explosive en sortie de la zone 120, et génère suffisamment d'énergie au contact du solide porteur d'oxygène pour opérer le procédé de façon satisfaisante avec une température supérieure aux 900 °C de l'expérimentation. Par rapport à l'exemple 1 selon l'état de l'art, la mise en oeuvre de l'invention permet d'opérer la combustion du gaz naturel sur un oxyde de manganèse par combustion en boucle chimique de façon efficace.

*Exemple 3 selon l'invention*

Comme pour l'exemple 2, l'exemple 3 se base sur une installation telle que décrite en référence à la figure 1. Les objectifs exposés dans l'exemple 2, à savoir que la puissance visée, ainsi que le porteur d'oxygène et la nature de la charge traitée, sont les mêmes pour cet exemple 3. La seule différence dans la mise en oeuvre selon cet exemple 3 est que le gaz utilisé pour le pré-reformage de la charge 17 n'est pas de la vapeur d'eau comme dans l'exemple 2, mais du $CO_2$.

L'alimentation en charge hydrocarbonée 17 de la zone de pré-reformage 130 est également de 14,9 t/h, et sa composition est celle donnée à l'exemple 1. Le gaz utilisé pour le pré-reformage de la charge 17 est du $CO_2$ extrait de la chaine de compression du $CO_2$ à destination du transport/stockage, située en aval de la zone de réduction 120. On conserve un ratio molaire de 1,4, mais dans ce cas exprimé en $CO_2$ sur carbone. Cela correspond à un flux de 56,9 t/h à 160 °C.

La zone de pré-reformage 130 est opérée à 800°C comme dans l'exemple 2. Les réactions de reformage et principalement celle du méthane sont endothermiques. La réaction de reformage « sec » du méthane et son enthalpie de réaction ΔrH sont données ci-dessous.

$$CH_4 + CO_2 \rightarrow 2.CO + 2.H_2 \quad \Delta_r H = 260 \text{ kJ/mol} \qquad (9)$$

Les expériences menées au laboratoire indiquent qu'une conversion de 40% de la charge en amont du réacteur de combustion est suffisante pour atteindre une conversion globale du méthane supérieure à 98 %.

La mise en température et la fourniture de l'énergie de réaction pour le reformage partiel de la charge soit 55,6 $MW_{th}$ sont assurées par conduction par les parois 140 entre la zone de réduction 120 et la zone de pré-reformage 130. Il résulte de cette étape de pré-reformage une charge reformée 14 qui a la composition en fractions molaires donnée dans le tableau 5.

Tableau 5

| | |
|---|---|
| Methane | 0,141 |
| Ethane | 0,008 |
| Propane | 0,000 |
| n-Butane | 0,000 |
| n-Pentane | 0,000 |
| Nitrogen | 0,010 |
| Oxygen | 0,000 |
| H2O | 0,092 |
| Helium | 0,000 |
| Argon | 0,000 |
| Carbon | 0,000 |
| $CO_2$ | 0,195 |
| CO | 0,367 |
| $H_2$ | 0,187 |

La vapeur injectée dans la zone de pré-reformage 130 permet la fluidisation dans la zone 120, et l'injection d'un gaz supplémentaire 15 n'est pas nécessaire. La charge reformée comporte une fraction importante de CO et d'$H_2$. Ces composés ont une cinétique de combustion rapide au contact d'un porteur d'oxygène. Cela permet d'atteindre une conversion globale du méthane supérieure à 98%, comme indiqué par la composition de l'effluent 12 issu de la combustion donnée dans le tableau 6.

Tableau 6

| | |
|---|---|
| Methane | 0,002 |
| Ethane | 0,000 |
| Propane | 0,000 |
| n-Butane | 0,000 |
| n-Pentane | 0,000 |
| Nitrogen | 0,008 |
| Oxygen | 0,000 |
| H2O | 0,443 |
| Helium | 0,000 |
| Argon | 0,000 |
| Carbon | 0,000 |
| $CO_2$ | 0,547 |
| CO | 0,000 |
| $H_2$ | 0,000 |

Le méthane résiduel dans l'effluent 12 représente 137 kg/h soit une conversion de 99,1 %. Ce niveau de conversion diminue les risques de formation d'une atmosphère explosive et génère suffisamment d'énergie au contact du solide pour opérer le procédé de façon satisfaisante avec une température supérieure aux 900 °C de l'expérimentation. Par rapport à l'état de l'art la mise en oeuvre de l'invention permet d'opérer la combustion du gaz naturel sur un oxyde de manganèse par combustion en boucle chimique de façon efficace.

**Revendications**

**1.** Installation de combustion d'une charge hydrocarbonée gazeuse par oxydo-réduction en boucle chimique, comprenant :

- une zone de pré-reformage (130,330,530) comportant une entrée pour la charge hydrocarbonée gazeuse, une alimentation en un gaz oxydant de reformage, une sortie pour un mélange gazeux comprenant du gaz de synthèse, et un catalyseur fixe de la réaction de reformage;
- une zone de réduction (120,320,520) munie de moyens d'injection d'un gaz de fluidisation, d'une alimentation en ledit mélange gazeux, d'une entrée pour une masse active oxydo-réductrice sous forme de particules, et d'une évacuation pour un effluent gazeux et pour la ladite masse active oxydo-réductrice ;
- une zone d'oxydation (110) munie d'une alimentation en ladite masse active oxydo-réductrice issue de la zone de réduction (120,320,520), de moyens d'injection d'un gaz de fluidisation oxydant, d'une évacuation d'un gaz oxydant appauvri et de ladite masse active oxydo-réductrice ;

dans laquelle ladite zone de pré-reformage (130,330,530) et ladite zone d'oxydation (110) ou ladite zone de pré-reformage (130,330,530) et ladite zone de réduction (120,320,520) sont intégrées thermiquement dans un même réacteur (100,200,300,400,500) en étant séparées par au moins une paroi de séparation thermiquement conductrice (140,340,440,540).

**2.** Installation selon la revendication 1, dans laquelle le réacteur (100,300,400,500) comprend la zone de pré-reformage (130,330,530) et la zone de réduction (120,320,520).

**3.** Installation selon la revendication 1, dans laquelle le réacteur (200) comprend la zone de pré-reformage (130) et la zone d'oxydation (110).

**4.** Installation selon l'une des revendications précédentes, dans laquelle le réacteur (300,400) comprend en son centre ladite zone de réduction (320) ou ladite zone d'oxydation entourée d'une enveloppe rigide, ladite enveloppe étant composée, du centre vers la périphérie du réacteur (300, 400), d'une première couche (340) formée d'un matériau anti-abrasion thermiquement conducteur et d'une deuxième couche (322) composée d'un matériau réfractaire, ladite zone de pré-reformage (330) étant intégrée à ladite enveloppe.

**5.** Installation selon la revendication 4, dans laquelle ladite paroi de séparation thermiquement conductrice comprend au moins ladite première couche (340) de ladite enveloppe du réacteur.

**6.** Installation selon la revendication 4, dans laquelle ladite zone de pré-reformage (330) comprend au moins une enceinte délimitée par une paroi composée d'une première partie (440) en contact avec la zone de réduction (320) et d'une deuxième partie en contact ladite première ou deuxième couche de l'enveloppe du réacteur, et dans laquelle ladite première partie en contact avec la zone de réduction (320) constitue la paroi de séparation thermiquement conductrice.

**7.** Installation selon l'une des revendications 4 à 6, dans laquelle la zone de pré-reformage (330) comprend un ensemble de tubes métalliques disposés verticalement autour de la zone de réduction/oxydation.

**8.** Installation selon l'une des revendication 1 et 2, dans laquelle la zone de pré-reformage (530) est intégrée aux moyens d'injection du gaz de fluidisation de la zone de réduction (520), et est de préférence constituée par une couronne d'injection du gaz de fluidisation.

**9.** Installation selon l'une des revendications précédentes, dans laquelle le catalyseur de la réaction de reformage est un lit fixe d'un catalyseur sous forme de particules, tel qu'un catalyseur comprenant du nickel.

**10.** Installation selon l'une des revendications 1 à 8, dans laquelle le catalyseur de la réaction de reformage est un interne fixe contenu dans la zone de pré-reformage (130,330,530), tel qu'une mousse de nickel ou un ensemble d'ailettes ou de chicanes disposées sur une face interne de la zone de pré-reformage.

**11.** Installation selon l'une des revendications précédentes, dans laquelle ladite au moins une paroi thermiquement conductrice (140,340,440,540) a une conductivité thermique supérieure à 0,1 W/(m.K), de préférence supérieure à 1 W/(m.K).

**12.** Procédé de combustion d'une charge hydrocarbonée gazeuse par oxydo-réduction en boucle chimique mis en oeuvre dans une installation selon l'une des revendications 1 à 11, dans lequel :

- on envoie la charge hydrocarbonée gazeuse (17) dans une zone de pré-reformage (130) comprenant un catalyseur fixe pour effectuer le reformage catalytique de ladite charge hydrocarbonée (17) au contact d'un gaz oxydant de reformage (18), tel que la vapeur d'eau ou du $CO_2$, et produire un mélange gazeux (14) comportant du gaz de synthèse ;
- on envoie ledit mélange gazeux (14) dans une zone de réduction (120,320,520) opérant en lit fluidisé pour effectuer la combustion du dit mélange gazeux (14) au contact d'une masse active oxydo- réductrice sous forme de particules (13);
- on oxyde les particules de la masse active oxydo-réductrice (10) issues de la zone de réduction (120,320,520) par mise en contact avec un flux de gaz oxydant (11) dans une zone d'oxydation (110) opérant en lit fluidisé; et
- on transfère la chaleur du lit fluidisé de la zone de réduction (120,320,520) ou de la zone d'oxydation (110) vers la zone de pré-reformage au moyen d'au moins une paroi thermiquement conductrice (140,340,440,540) séparant ladite zone de pré-reformage (130,330,530) de ladite zone de réduction (120,320,520) ou de ladite zone d'oxydation (110).

**13.** Procédé selon la revendication 12, dans lequel la température du lit fluidisé de la zone de réduction (120,320,520) et de la zone d'oxydation (110), circulant entres lesdites zones de réduction et d'oxydation, est comprise entre 700°C et 1100°C, et la chaleur transférée dudit lit fluidisé vers la zone de pré-reformage (130,330,530) est telle que la température dans ladite zone de pré-reformage (130,330,530) est favorable à la réaction de reformage catalytique de la charge hydrocarbonée gazeuse, ladite température étant de préférence comprise entre 650°C et 1000°C.

**14.** Procédé selon l'une des revendications 12 et 13, dans lequel le transfert de chaleur est réalisé de la zone de réduction (520) vers la zone pré-reformage (530), et dans lequel on envoie le gaz oxydant de reformage (18), la charge hydrocarbonée gazeuse (17), et éventuellement un gaz supplémentaire de fluidisation (15), dans des moyens de fluidisation de la zone de réduction (520), de préférence dans une couronne d'injection de gaz, et on opère le reformage de ladite charge (17) au sein desdits moyens de fluidisation constituant la zone de pré-reformage (530).

**15.** Procédé selon l'une des revendications 12 à 14, dans lequel la charge hydrocarbonée gazeuse (17) comprend essentiellement du méthane, et dans lequel le reformage de ladite charge au sein de la zone de pré-reformage (130,330,530) est opéré en présence d'un catalyseur de reformage du méthane comprenant du nickel.

**Patentansprüche**

**1.** Anlage zur Verbrennung einer gasförmigen Kohlenwasserstoffcharge durch Redox-Chemical Looping, umfassend:

- eine Vorreformierungszone (130, 330, 530), umfassend einen Eingang für die gasförmige Kohlenwasserstoffcharge, eine Versorgung mit einem Reformierungsoxidationsgas, einen Ausgang für ein gasförmiges Gemisch, umfassend Synthesegas, und einen gebundenen Katalysator der Reformierungsreaktion;
- eine Reduktionszone (120, 320, 520), die mit Einspritzmitteln eines Fluidisierungsgases, einer Versorgung mit dem gasförmigen Gemisch, einem Eingang für eine aktive Redox-Masse in der Form von Partikeln und einer Abfuhr für einen gasförmigen Abstrom und für die aktive Redox-Masse versehen ist;
- eine Oxidationszone (110), welche mit einer Versorgung mit der aktiven Redox-Masse, die aus der Reduktionszone (120, 320, 520) stammt, Einspritzmitteln eines Fluidisierungsoxidationsgases, einer Abfuhr eines verarmten Oxidationsgases und der aktiven Redox-Masse versehen ist;

wobei die Vorreformierungszone (130, 330, 530) und die Oxidationszone (110) oder die Vorreformierungszone (130, 330, 530) und die Reduktionszone (120, 320, 520) thermisch in demselben Reaktor (100, 200, 300, 400, 500) integriert sind, indem sie durch mindestens eine thermisch leitfähige Trennwand (140, 340, 440, 540) getrennt sind.

**2.** Anlage nach Anspruch 1, wobei der Reaktor (100, 300, 400, 500) die Vorreformierungszone (130, 330, 530) und die Reduktionszone (120, 320, 520) umfasst.

**3.** Anlage nach Anspruch 1, wobei der Reaktor (200) die Vorreformierungszone (130) und die Oxidationszone (110) umfasst.

**4.** Anlage nach einem der vorhergehenden Ansprüche, wobei der Reaktor (300, 400) in seinem Zentrum die Reduktionszone (320) oder die Oxidationszone umfasst, die von einer starren Umhüllung umgeben ist, wobei die Umhüllung, vom Zentrum zum Umfang des Reaktors (300, 400), aus einer ersten Schicht (340), die aus einem thermisch leitfähigen Antiabriebmaterial gebildet ist, und einer zweiten Schicht (322), die aus einem feuerfesten Material zusammengesetzt ist, besteht, wobei die Vorreformierungszone (330) in die Umhüllung integriert ist.

**5.** Anlage nach Anspruch 4, wobei die thermisch leitfähige Trennwand mindestens die erste Schicht (340) der Umhüllung des Reaktors umfasst.

**6.** Anlage nach Anspruch 4, wobei die Vorreformierungszone (330) mindestens eine Hülle umfasst, welche von einer Wand begrenzt wird, die aus einem ersten Teil (440) in Kontakt mit der Reduktionszone (320) und aus einem zweiten Teil in Kontakt mit der ersten oder zweiten Schicht der Umhüllung des Reaktors besteht, und wobei der erste Teil in Kontakt mit der Reduktionszone (320) die thermisch leitfähige Trennwand bildet.

**7.** Anlage nach einem der Ansprüche 4 bis 6, wobei die Vorreformierungszone (330) eine Einheit von Metallrohren umfasst, die vertikal rund um die Reduktions/Oxidationszone angeordnet sind.

**8.** Anlage nach einem der Ansprüche 1 und 2, wobei die Vorreformierungszone (530) in den Einspritzmitteln des Fluidisierungsgases der Reduktionszone (520) integriert ist und vorzugsweise aus einem Einspritzring des Fluidisierungsgases besteht.

**9.** Anlage nach einem der vorhergehenden Ansprüche, wobei der Katalysator der Reformierungsreaktion ein Festbett eines Katalysators in der Form von Partikeln ist, wie eines Katalysators, der Nickel umfasst.

**10.** Anlage nach einem der Ansprüche 1 bis 8, wobei der Katalysator der Reformierungsreaktion ein interner gebundener Katalysator ist, der in der Vorreformierungszone (130, 330, 530) enthalten ist, wie ein Nickelschaum oder eine Flügel- oder Ablenkanordnung ist, die an einer Innenfläche der Vorreformierungszone angeordnet sind.

**11.** Anlage nach einem der vorhergehenden Ansprüche, wobei die mindestens eine thermisch leitfähige Wand (140, 340, 440, 540) eine thermische Leitfähigkeit von 0,1 W/(m.K), vorzugsweise mehr als 1 W/(m.K), aufweist.

**12.** Verfahren zur Verbrennung einer gasförmigen Kohlenwasserstoffcharge durch Redox-Chemical Looping, welches in einer Anlage nach einem der Ansprüche 1 bis 11 durchgeführt wird, wobei:

- die gasförmige Kohlenwasserstoffcharge (17) in eine Vorreformierungszone (130) geschickt wird, umfassend einen gebundenen Katalysator, um die katalytische Reformierung der Kohlenwasserstoffcharge (7) in Kontakt mit einem Reformierungsoxidationsgas (18) durchzuführen, wie Wasserdampf oder $CO_2$, und ein gasförmiges Gemisch (14) zu erzeugen, umfassend Synthesegas;
- das gasförmige Gemisch (14) in eine Reduktionszone (120, 320, 520) geschickt wird, die im Fließbett arbeitet, um die Verbrennung des gasförmigen Gemischs (14) in Kontakt mit einer aktiven Redox-Masse in der Form von Partikeln (13) durchzuführen;
- die Partikel der aktiven Redox-Masse (10), die aus der Reduktionszone (120, 320, 520) stammen, durch Inkontaktbringen mit einem Oxidationsgasstrom (11) in einer Oxidationszone (110) oxidiert werden, die im Fließbett arbeitet; und
- die Wärme des Fließbetts der Reduktionszone (120, 320, 520) oder der Oxidationszone (110) zu der Vorreformierungszone mittels mindestens einer thermisch leitfähigen Wand (140, 340, 440, 540) transferiert wird, welche die Vorreformierungszone (130, 330, 530) von der Reduktionszone (120, 320, 520) oder von der Oxidationszone (110) trennt.

**13.** Verfahren nach Anspruch 12, wobei die Temperatur des Fließbetts der Reduktionszone (120, 320, 520) und der Oxidationszone (110), das zwischen der Reduktions- und Oxidationszone zirkuliert, zwischen 700 °C und 1100 °C beträgt, und die Wärme, die von dem Fließbett zu der Vorreformierungszone (130, 330, 530) transferiert wird, derart ist, dass die Temperatur in der Vorreformierungszone (130, 330, 530) für die katalytische Reformierungsreaktion der gasförmigen Kohlenwasserstoffcharge vorteilhaft ist, wobei die Temperatur vorzugsweise zwischen 650 °C und 1000 °C beträgt.

**14.** Verfahren nach einem der Ansprüche 12 und 13, wobei der Wärmetransfer von der Reduktionszone (520) zu der Vorreformierungszone (530) durchgeführt wird, und wobei das Reformierungsoxidationsgas (18), die gasförmige Kohlenwasserstoffcharge (17) und gegebenenfalls ein ergänzendes Fluidisierungsgas (15) in die Fluidisierungsmittel der Reduktionszone (520), vorzugsweise in einen Gaseinspritzring, geschickt werden, und die Reformierung der Charge (17) im Inneren der Fluidisierungsmittel betrieben wird, welche die Vorreformierungszone (530) bilden.

**15.** Verfahren nach einem der Ansprüche 12 bis 14, wobei die gasförmige Kohlenwasserstoffcharge (17) im Wesentlichen Methan umfasst, und wobei die Reformierung der Charge im Inneren der Vorreformierungszone (130, 330, 530) in Anwesenheit eines Reformierungskatalysators aus Methan, umfassend Nickel, betrieben wird.

## Claims

**1.** A plant for chemical looping oxidation-reduction combustion of a gaseous hydrocarbon feed, comprising:

- a pre-reforming zone (130, 330, 530) comprising an inlet for the gaseous hydrocarbon feed, a feed point for an oxidizing reforming gas, an outlet for a gas mixture comprising syngas and a fixed catalyst for the reforming reaction,
- a reduction zone (120, 320, 520) provided with means of injecting a fluidization gas, a feed point for said gas mixture, an inlet for a redox active mass in form of particles and an outlet for a gaseous effluent and for said redox active mass,
- an oxidation zone (110) provided with a feed point for said redox active mass from reduction zone (120, 320, 520), means of injecting an oxidizing fluidization gas, and an outlet for a depleted oxidizing gas and for said redox active mass,

wherein said pre-reforming zone (130, 330, 530) and said oxidation zone (110) or said pre-reforming zone (130,

330, 530) and said reduction zone 120, 320, 520) are thermally integrated in the same reactor (100, 200, 300, 400, 500) while being separated by at least one thermally conductive separation wall (140, 340, 440, 540).

**2.** A plant as claimed in claim 1, wherein reactor (100, 300, 400, 500) comprises pre-reforming zone (130, 330, 530) and reduction zone (120, 320, 520).

**3.** A plant as claimed in claim 1, wherein reactor (200) comprises pre-reforming zone (130) and oxidation zone (110).

**4.** A plant as claimed in any one of the previous claims, wherein reactor (300, 400) comprises at the centre thereof said reduction zone (320) or said oxidation zone surrounded by a rigid casing, said casing consisting, from the centre to the periphery of reactor (300, 400), of a first layer (340) made of a thermally conductive anti-abrasion material and of a second layer (322) made of a refractory material, said pre-reforming zone (330) being integrated in said casing.

**5.** A plant as claimed in claim 4, wherein said thermally conductive separation wall comprises at least said first layer (340) of said reactor casing.

**6.** A plant as claimed in claim 4, wherein said pre-reforming zone (330) comprises at least one enclosure delimited by a wall consisting of a first part (440) in contact with reduction zone (320) and of a second part in contact with said first or second layer of the reactor casing, and wherein said first part in contact with reduction zone (320) makes up the thermally conductive separation wall.

**7.** A plant as claimed in any one of claims 4 to 6, wherein pre-reforming zone (330) comprises a set of metal tubes arranged vertically around the reduction/oxidation zone.

**8.** A plant as claimed in any one of claims 1 and 2, wherein pre-reforming zone (530) is integrated in the fluidization gas injection means of reduction zone (520), and it preferably consists of a fluidization gas injection ring.

**9.** A plant as claimed in any one of the previous claims, wherein the reforming reaction catalyst is a fixed bed of a catalyst in form of particles, such as a catalyst comprising nickel.

**10.** A plant as claimed in any one of claims 1 to 8, wherein the reforming reaction catalyst is a fixed internal contained in pre-reforming zone (130, 330, 530), such as a nickel foam or a set of fins or baffles arranged on an inner face of the pre-reforming zone.

**11.** A plant as claimed in any one of the previous claims, wherein said at least one thermally conductive wall (140, 340, 440, 540) has a thermal conductivity greater than 0.1 W/(m.K), preferably greater than 1 W/(m.K).

**12.** method for chemical looping oxidation-reduction combustion of a gaseous hydrocarbon feed implemented in a plant as claimed in any one of claims 1 to 11, comprising:

- sending gaseous hydrocarbon feed (17) to a pre-reforming zone (130) comprising a fixed catalyst so as to perform catalytic reforming of said hydrocarbon feed (17) on contact with an oxidizing reforming gas (18) such as steam or $CO_2$ and to produce a gas mixture (14) comprising syngas,
- sending said gas mixture (14) to a fluidized-bed reduction zone (120, 320, 520) to perform combustion of said gas mixture (14) on contact with a redox active mass in form of particles (13),
- oxidizing redox active mass particles (10) from reduction zone (120, 320, 520) by contacting with an oxidizing gas stream (11) in a fluidized-bed oxidation zone (110), and
- transferring the heat of the fluidized bed from reduction zone (120, 320, 520) or oxidation zone (110) to the pre-reforming zone by means of at least one thermally conductive wall (140, 340, 440, 540) separating said pre-reforming zone (130, 330, 530) from said reduction zone (120, 320, 520) or said oxidation zone (110).

**13.** A method as claimed in claim 12, wherein the temperature of the fluidized bed in reduction zone (120, 320, 520) and in oxidation zone (110), circulating between said reduction and oxidation zones, ranges between 700°C and 1100°C, and the heat transferred from said fluidized bed to pre-reforming zone (130, 330, 530) is such that the temperature in said pre-reforming zone (130, 330, 530) is favourable to the catalytic reforming reaction of the gaseous hydrocarbon feed, said temperature preferably ranging between 650°C and 1000°C.

**14.** A method as claimed in any one of claims 12 and 13, wherein the heat transfer is achieved from reduction zone (520) to pre-reforming zone (530), and wherein oxidizing reforming gas (18), gaseous hydrocarbon feed (17) and possibly an additional fluidization gas (15) are sent to fluidization means of reduction zone (520), preferably a gas injection ring, and reforming of said feed (17) is performed within said fluidization means making up pre-reforming zone (530).

**15.** A method as claimed in any one of claims 12 to 14, wherein gaseous hydrocarbon feed (17) essentially comprises methane, and wherein reforming of said feed within pre-reforming zone (130, 330, 530) is operated in the presence of a methane reforming catalyst comprising nickel.

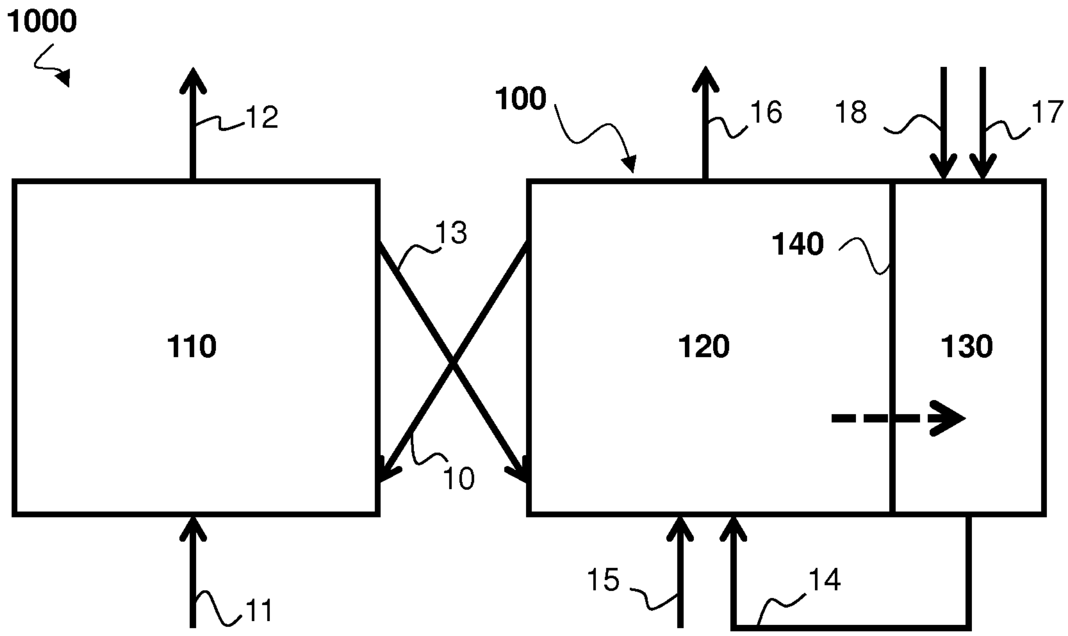
1000
12
100
16
18
17
13
140
110
120
130
10
15
14
11

FIG. 1

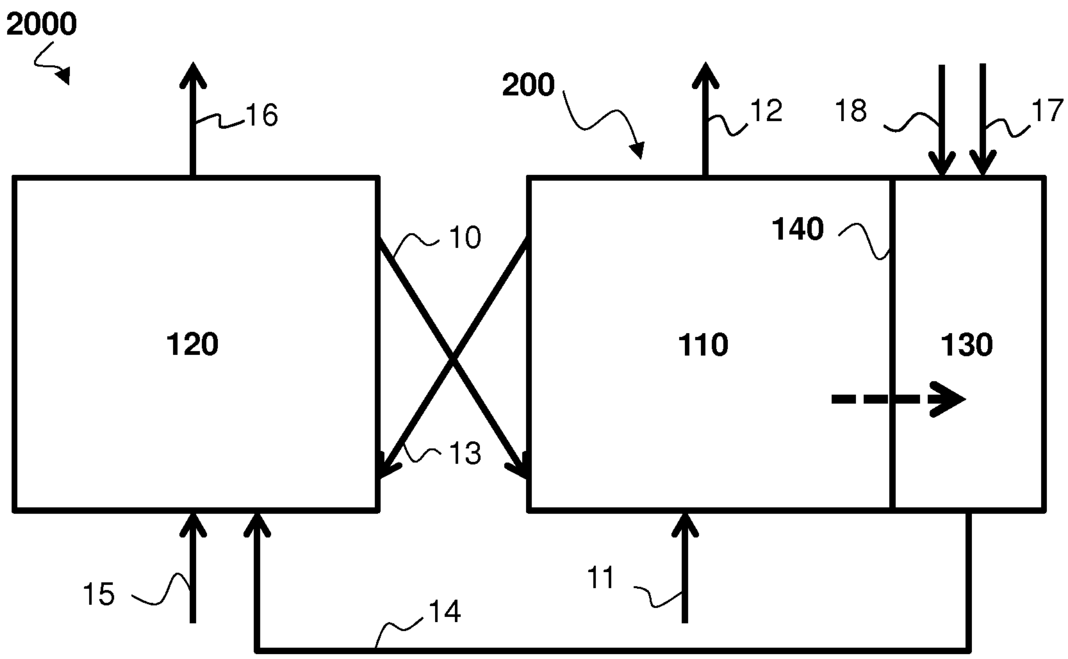
2000
16
200
12
18
17
10
140
120
110
130
13
15
11
14

FIG. 2

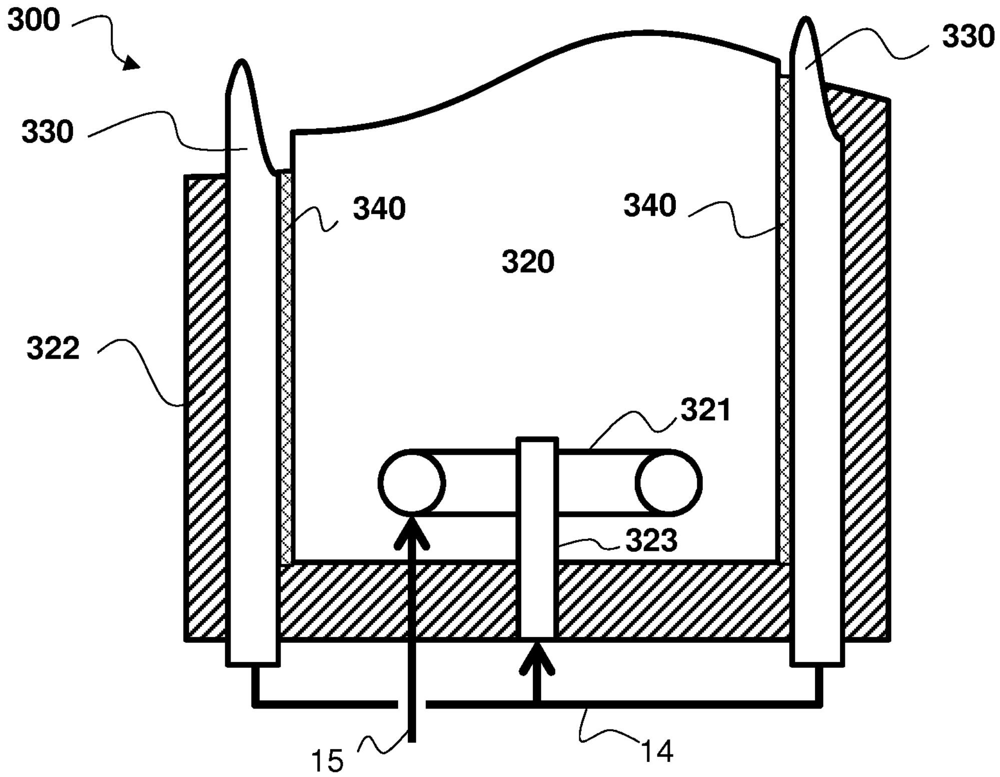
300
330
330
340
340
320
322
321
323
15
14

FIG. 3

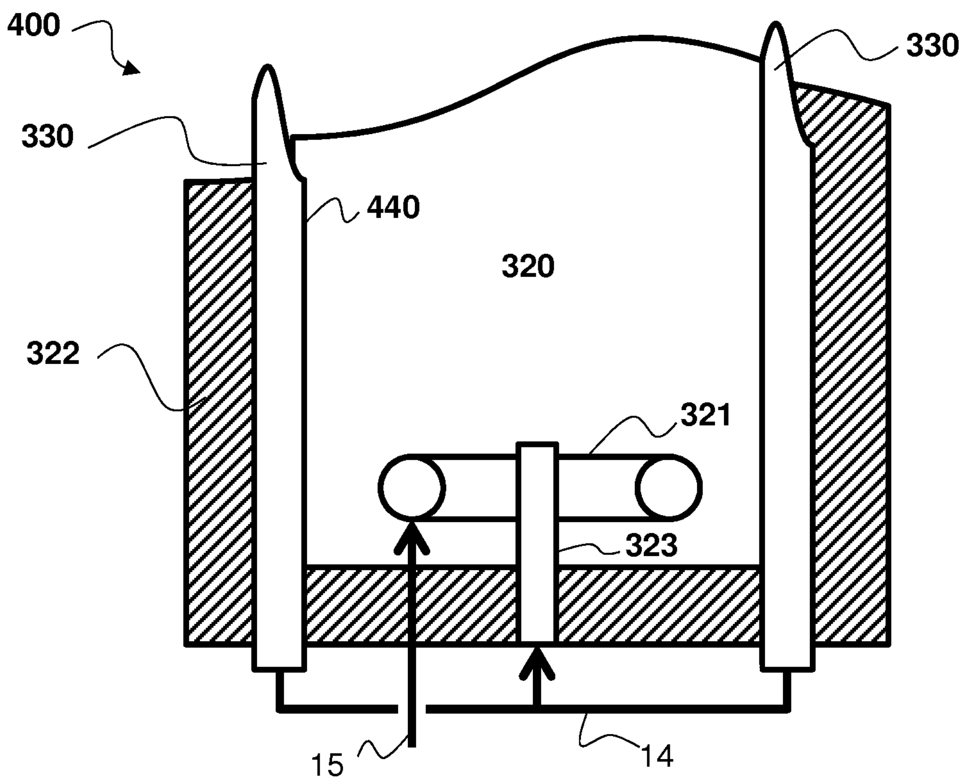
400
330
330
440
320
322
321
323
15
14

FIG. 4

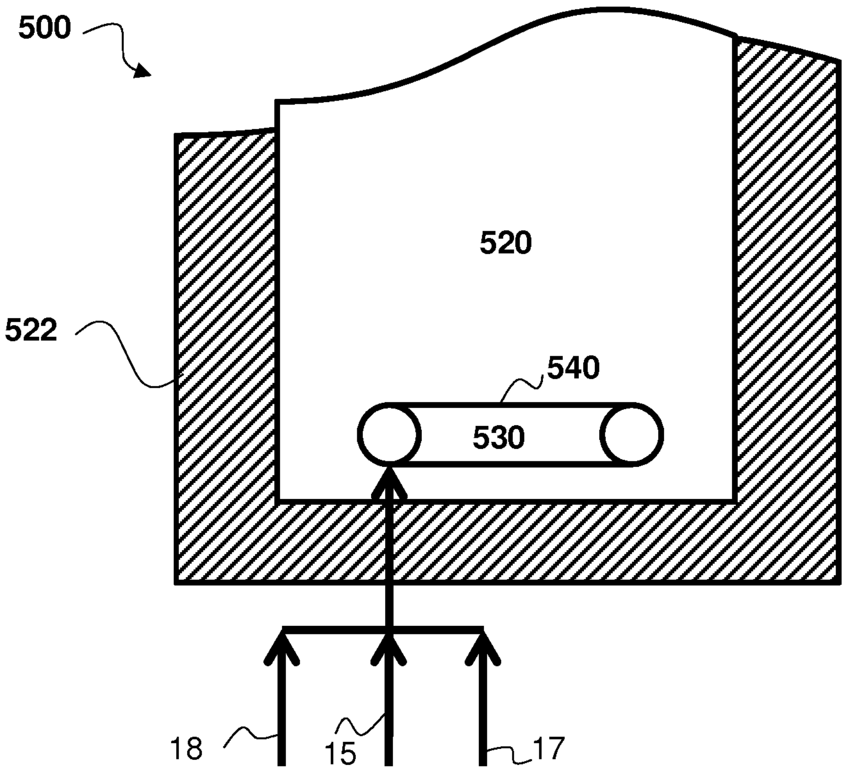


FIG. 5

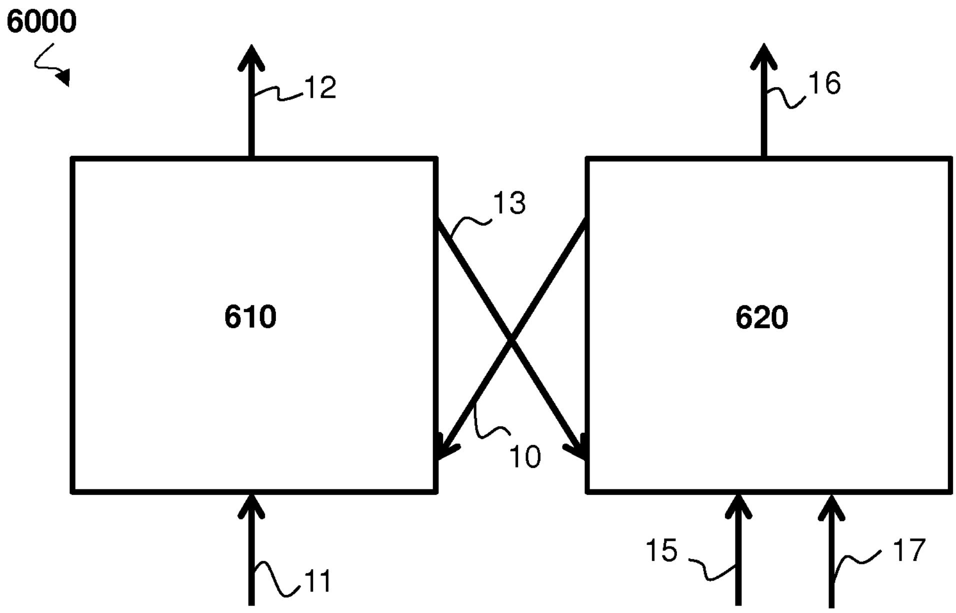


FIG. 6
ART ANTERIEUR

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5447024 A


### Littérature non-brevet citée dans la description


- **SOAVE REDLICH KWONG ; LEE KESSLER.** Equilibrium constants from a modified Redlich-Kwong equation of state. *Chemical Engineering Science,* vol. 27 (6), 1197-1203
- **LEE B.I. ; KESLER M.G.** A Generalized Thermodynamic Correlation Based on Three-Parameter Corresponding States. *AIChE J.,* 1975, vol. 21 (3), 510-527